Europäisches Patentamt

European Patent Office

Office européen des brevets

(11) Veröffentlichungsnummer: **0 075 532**
A2

## (12) EUROPÄISCHE PATENTANMELDUNG

(21) Anmeldenummer: 82730118.5

(22) Anmeldetag: 08.09.82

(51) Int. Cl.³: **B 60 C 27/08**

(30) Priorität: 17.09.81 DE 3137310

(43) Veröffentlichungstag der Anmeldung: 30.03.83
Patentblatt 83/13

(84) Benannte Vertragsstaaten: **AT CH GB IT LI SE**

(71) Anmelder: **RUD-Kettenfabrik Rieger & Dietz GmbH u.
Co., Friedensinsel, D-7080 Aalen 1 (DE)**

(72) Erfinder: **Weidler, Erhard, Danziger Strasse 32,
D-7080 Aalen-Unterkochen (DE)**

(74) Vertreter: **Böning, Manfred, Dr. Ing. et al, Patentanwälte
Dipl.-Ing. Dieter Jander Dr. Ing. Manfred Böning
Kurfürstendamm 66, D-1000 Berlin 15 (DE)**

(54) **Reifenkette.**

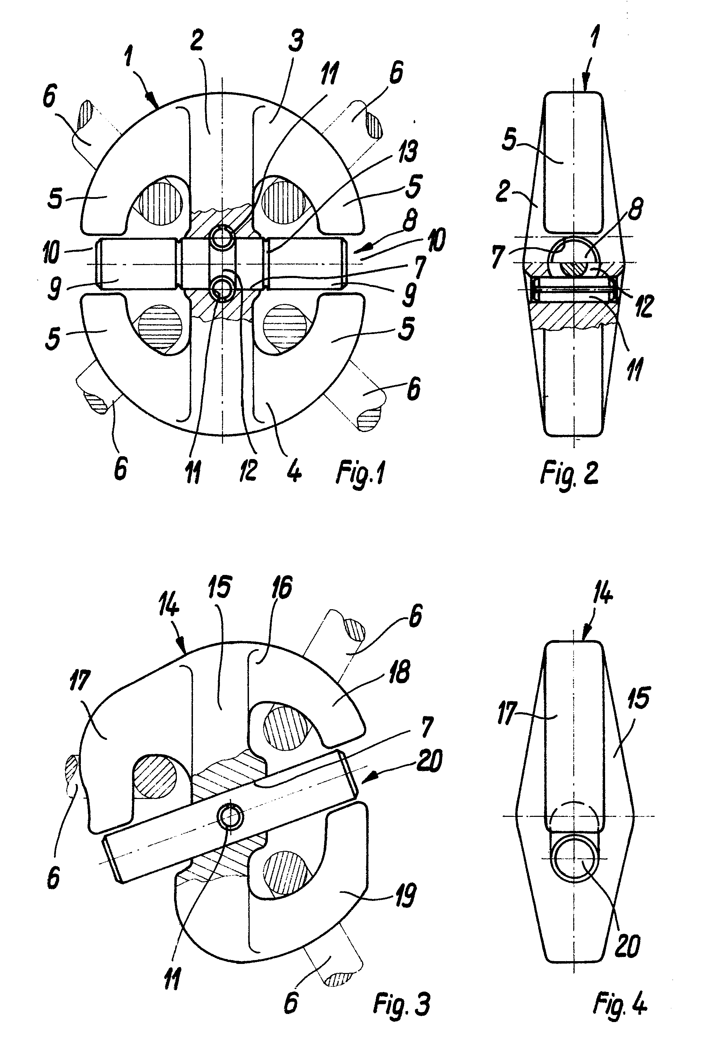

㊹ Bei einer Reifenkette sind an den Knotenpunkten des
Kettennetzes Bauteile (1) angeordnet, die mindestens einen T-
förmigen Abschnitt aufweisen, dessen Querbalken (3,4) Haltearme (5) für einzuhängende Kettenglieder (6) bildet und bei
denen zur Sicherung der in die hakenförmigen Haltearme (5)
eingehängten Kettenglieder (6) Verriegelungszapfen (9) bildende Enden eines in der Mitte des Längsbalkens des T-
förmigen Abschnittes in einer Bohrung (7) gelagerten Schliesselements (8) dienen (Fig. 1.).

EP 0 075 532 A2

Reifenkette

Die Erfindung betrifft eine Reifenkette mit einer Knotenpunkte aufweisenden Netzkonfiguration, bei der mindestens drei Kettenglieder im Bereich der Knotenpunkte über ein liegend angeordnetes, d.h. parallel zur Reifenfläche orientiertes Bauteil miteinander verbunden sind, das mit hakenförmigen Haltearmen und Einführschlitzen zum Einhängen von Kettengliedern sowie mit mindestens einem Schließelement für die Einführschlitze versehen ist.

Bei Reifenketten der vorstehenden Art kommt den im Bereich der Knotenpunkte angeordneten Bauteilen für die Festigkeit, Montage, Reparatur und Funktionstüchtigkeit der Kette entschiedene Bedeutung zu. Nicht zuletzt aus diesem Grunde wurden zahlreiche Lösungen mit dem Bestreben entwickelt, den gestellten Anforderungen in größtmöglicher Weise gerecht zu werden.

Am stärksten verbreitet sind Reifenketten, bei denen die an den Knotenpunkten liegend angeordneten Bauteile von Kettenschlössern mit einem Grundkörper gebildet werden, dessen Form an die Form runder oder ovaler Kettenglieder angepaßt ist und der mit einem schließbaren Einführschlitz für die einzuhängenden Kettenglieder versehen ist. Bei diesen Kettenschlössern werden drei und mehr Kettenglieder in ein- und derselben Aufnahme gehalten, was mit einer erheblichen Balstung des Grundkörpers verbunden ist und eine zumindest kraftschlüssige Überbrückung der den Einführschlitz begrenzenden Enden praktisch zwangsläufig erforderlich macht.

Ein Kettenschloß der angedeuteten Art ist beispielsweise aus der DE-AS 12 83 613 bekannt. Es besitzt einen Querschnitt, der eine vergleichsweise starke Einengung der Beweglichkeit der zwischen den Knotenpunkten gelegenen Netzteile mit sich bringt. Zum Überbrücken und Schließen des Einführschlitzes dienen bei diesem Kettenschloß zusammenschraubbare, kraftschlüssig wirkende Klemmelemente mit allen Nachteilen, die eine unerwünschte Lockerung der zum Aufbringen der Klemmkraft dienenden Schraubverbindung in sich birgt.

Ein ähnlich aufgebautes Kettenschloß mit einer durch Formschluß unterstützten Klemmverbindung zeigt die DE-GMS 19 71 292. Die Formschlüssigkeit verbessert hier zwar die Festigkeit der Verbindung, die Gefahr einer nicht gewollten Lockerung bleibt indessen. Nachteilig ist bei beiden genannten Konstruktionen zudem, daß zum Schließen des Einführschlitzes verhältnismässig viele Teile benötigt werden, die zudem im Verschleißbereich der Reifenkette liegen.

Verschleißmässig günstiger sind die Schließelemente des Kettenschlosses nach der DE-PS 21 12 440 angeordnet, da bei diesem Schloß die zum Festklemmen der Schließelemente verwendete Schraube in die Schloßebene verlegt ist. Auch hier besteht jedoch nach wie vor die Gefahr einer Lockerung der Schraubverbindung.

Ohne eine Klemmkräfte aufbringende Schraubverbindung kommt man bei dem Kettenschloß nach der DE-PS 16 05 672 aus, bei dem ein mit zwei Aufnahmebohrungen für den Einführschlitz begrenzende abgewinkelte Enden eines ringförmigen Grundkörpers versehenes Schließstück

- 3 -

Verwendung findet. Zur Sicherung des Schließstückes dienen hier Spannstifte, die aufgrund einer ungünstigen Anordnung erheblichen Beanspruchungen ausgesetzt sind und nach einer gewissen Einsatzdauer der Reifenkette zum Abscheren neigen.

Ein gemeinsamer weiterer Nachteil aller bisher beschriebenen Lösungen besteht darin, daß sämtliche einzuhängenden Kettenglieder an ein und derselben Stelle in den Grundkörper der an den Knotenpunkten angeordneten Kettenschlösser eingehängt werden müssen, dies erschwert das Anschliessen der Endglieder der in unterschiedlichen Richtungen von den Knotenpunkten abgehenden Kettenstränge insbesondere bei schweren Reifenschutzketten erheblich.

Eine Reifenkette der eingangs beschriebenen Gattung, bei der das Einhängen der an die Knotenpunkte anzuschliessenden Kettenglieder durch die Verwendung von Bauteilen mit mehreren Einführschlitzen erleichtert wird, ist aus der US-PS 1 806 064 bekannt. Das im Bereich der Knotenpunkte angeordnete Bauteil wird hier von zwei parallel auf einem gemeinsamen Schwenkzapfen gelagerten Platten gebildet, deren Rand mit vier im wesentlichen L-förmigen Einführschlitzen versehen ist. Die Anordnung der Einführschlitze ist dabei so getroffen, daß durch eine Drehung der übereinanderliegenden Platten eine Verriegelung der Kettenglieder möglich ist, wobei die Platten im verriegelten Zustand durch ein Niet miteinander verbunden sind und Rastnocken und Rastlücken an den einander zugewandten Plattenflächen eine Arretierung der Platten in der Verriegelungsstellung bewirken. Die bekannte Konstruktion vermag insofern nicht zu befriedigen, als die Herstellung der Platten aufwendig und ihre Handhabung
und Verriegelung bei der Kettenmontage mühsam sind.
Außerdem läßt die Festigkeit der Bauteile zu wünschen
übrig und der Raumbedarf der Bauteile ist groß.

Der Erfindung liegt die Aufgabe zugrunde, eine Reifenkette der in Betracht gezogenen Art, d.h. eine
Reifenkette mit im Bereich ihrer Knotenpunkte liegend
angeordneten Bauteilen mit mehreren Einführschlitzen
und den einzeln einzuhängenden Gliedern zugeordneten
Haltearmen so weiterzuentwickeln, daß ihre die Knotenpunkte bildenden Bauteile bei einfachem Aufbau und
großer Festigkeit leicht mit Kettengliedern kuppelbar
sind und die Gewähr für eine einwandfreie Verriegelung
der in sie eingehängten Kettenglieder bieten. Die Aufgabe wird erfindungsgemäß dadurch gelöst, daß jedes
Bauteil mindestens einen im wesentlichen T-förmigen
Abschnitt aufweist, dessen Querbalken Haltearme formende, gekrümmte Schenkel besitzt und dessen Längsbalken mit einer Bohrung versehen ist, deren Achse im
wesentlichen in der Mittenebene der Haltearme verläuft
und die zur Aufnahme des Mittelteiles eines bolzenförmigen Schließelementes dient, dessen sich gegenüberliegende Enden Verriegelungszapfen für die in die
Haltearme des T-förmigen Abschnittes und in mindestens
einen weiteren Haltearm eingehängten Kettenglieder
bilden.

Die erfindungsgemässe Reifenkette bietet zahlreiche
Vorteile. Die an den Knotenpunkten angeordneten Bauteile sind einfach und stabil und eine Gefahr, daß
sich Kettenglieder unbeabsichtigt aushängen, besteht
nicht. Das als Bolzen ausgebildete Schließelement
liegt in einem verschleißgeschützten Bereich und beschränkt die Schwenkbewegung der in das jeweilige Bauteil eingehängten Kettenglieder nicht. Die Haltearme für die einzelnen Kettenglieder können kurz
und gedrungen sein und machen aus diesem Grunde
eine kraft- oder formschlüssige Überbrückung der
Einführschlitze entbehrlich. Dadurch, daß mehrere,
an sich gegenüberliegenden Seiten des Längsbalkens
des T-förmigen Abschnitts angeordnete Einführschlitze
vorhanden sind, bereitet das Einführen von Kettengliedern in die Einführschlitze aufgrund kurzer Einführwege keine Schwierigkeiten. Der Abstand zwischen
den Bugen der eingehängten Kettenglieder kann klein
gehalten werden und ein Verlust an Griffigkeit des
Laufnetzes im Bereich der Knotenpunkte wird vermieden.
Ebenso wird eine Verschleißmateriallücke vermieden,
die eine gesteigerte Abnutzung benachbarter, d.h. in
das Bauteil eingehängter Kettenglieder mit sich bringen würde. Durch die Abkehr von der bekannten Doppelplattenausführung gewinnt man schließlich eine größere
Freizügigkeit hinsichtlich der Querschnittsgestaltung
des Bauteils.

Die Erfindung wird im folgenden anhand mehrerer in
der beigefügten Zeichnung dargestellter Ausführungsbeispiele näher erläutert. Es zeigen:

Figur 1 teilweise im Schnitt die Draufsicht auf
einen ersten Knotenpunkt einer Reifenkette;

Figur 2 teilweise im Schnitt die Seitenansicht
des im Knotenpunkt gemäß Figur 1 angeordneten
Bauteiles;

Figur 3 teilweise im Schnitt die Draufsicht auf
einen weiteren Knotenpunkt einer Reifenkette;

Figur 4 die Seitenansicht des im Knotenpunkt
gemäß Figur 3 angeordneten Bauteiles;

Figur 5 die Draufsicht auf einen weiteren Knotenpunkt;

Figur 6 eine Seitenansicht des im Knotenpunkt
gemäß Figur 5 angeordneten Bauteiles;

Figur 7 die Draufsicht auf einen weiteren Knotenpunkt einer Reifenkette;

Figur 8 ein modifiziertes Schließelement;

Figur 9 teilweise im Schnitt die Draufsicht auf
einen weiteren Knotenpunkt einer Reifenkette;

Figur 10 eine Seitenansicht des im Knotenpunkt
gemäß Figur 9 angeordneten Bauteiles;

Figur 11 die Draufsicht auf einen weiteren Knotenpunkt;

Figur 12 teilweise im Schnitt die Draufsicht auf
einen weiteren Knotenpunkt einer Reifenkette;

Figur 13 die Draufsicht auf einen weiteren Knotenpunkt einer Reifenkette;

Figur 14 die Draufsicht auf einen weiteren Knotenpunkt einer Reifenkette;

Figur 15 die Draufsicht auf einen weiteren Knotenpunkt einer Reifenkette und

Figur 16 die Draufsicht auf einen nochmals modifizierten Knotenpunkt einer Reifenkette.

In Figur 1 ist mit 1 allgemein ein Bauteil bezeichnet,
das aus zwei sich gegenüberliegenden T-förmigen Abschnitten besteht, die einen gemeinsamen Längsbalken
2 und zwei sich gegenüberliegende Querbalken 3 und 4
aufweisen. Die Schenkel der Querbalken 3 und 4 sind
gekrümmt und bilden Haltearme 5 für die Endglieder 6
von im Bereich des Knotenpunktes durch das Bauteil
miteinander verbundenen Kettensträngen. Der Längsbalken
2 ist mit einer zentralen Bohrung 7 für ein bolzenförmiges Schließelement 8 versehen. Die Enden des Schließelementes 8 bilden Verriegelungszapfen 9 für die in
die Haltearme 5 eingehängten Kettenglieder 6. Aufgabe
der Verriegelungszapfen 9 ist es, die beiden sich gegenüberliegenden Einführschlitze 10 zu schliessen.

Zur Sicherung des Schließelementes in seiner Schließposition dienen Sicherungshülsen 11, die die Bohrung
7 für das Schließelement 8 schneiden und in Ausnehmungen des Schließelementes 8 greifen. Die Ausnehmungen
werden dabei von Teilen einer umlaufenden Arretiernut
12 gebildet. Um das Positionieren der Arretiernut 12
des Schließelementes 8 zu erleichtern, ist in einem
Abstand, der im wesentlichen gleich der halben Breite
des die Bohrung 7 umschliessenden Teils des Längsbalkens 2 ist, beidseits der Mitte des Schließelementes
8 jeweils eine von einer Rille 13 gebildete Orientierungshilfe angeordnet.

Wie man aus den Figuren 1 und 2 erkennen kann, ist der
Längsbalken 2 im Bereich der Bohrung 7 für das Schließelement 8 verstärkt. Die Verstärkung ermöglicht es, ein
vergleichsweise querschnittsstarkes Schließelement 8 zu benutzen und sie trägt gleichzeitig dazu bei, das Schließelement vor Verschleißangriffen zu schützen.

Wie man erkennt, sind die Haltearme kurz und gedrungen. Aufgrund der gewählten Krümmung kommen die Buge der Kettenglieder 6 in unmittelbarer Nähe des Längsbalkens 2 zu liegen. Die auf die Haltearme 5 ausgeübten Drehmomente sind folglich aufgrund der kleinen vorhandenen Hebelarme vergleichsweise gering. In der Draufsicht erhält man ein im wesentlichen elliptisches Bauteil, das sich durch große Robustheit und Biegefestigkeit der Haltearme 5 auszeichnet.

Durch das Schließelement 8 werden gleichzeitig vier Kettenglieder 6 in ihrer Position verriegelt. Der Spalt zwischen den Verriegelungszapfen 9 und den ihnen zugewandten Stirnflächen der Haltearme 5 sollte möglichst klein sein.

In den Figuren 3 und 4 ist ein Bauteil 14 dargestellt, dessen T-förmiger Abschnitt aus einem Längsbalken 15 und einem Querbalken 16 besteht, der zwei in Richtung des Längsbalkens 15 zueinander versetzt angeordnete Haltearme 17 und 18 aufweist. Am dem Querbalken 16 abgewandten Ende des Längsbalkens 15 befindet sich ein weiterer Haltearm 19. Aufgrund der gewählten Ausbildung des Bauteiles 14 ist es für die Realisierung von Knotenpunkten mit drei sich im Knotenpunkt treffenden Kettengliedern 6 verwendbar. Das Schließelement 20, welches hier von einem glatten Bolzen gebildet wird, verläuft in diesem Falle schräg zur Längsachse des Längsbalkens 15. Zu seiner Sicherung dient eine einzelne Spannhülse 11.

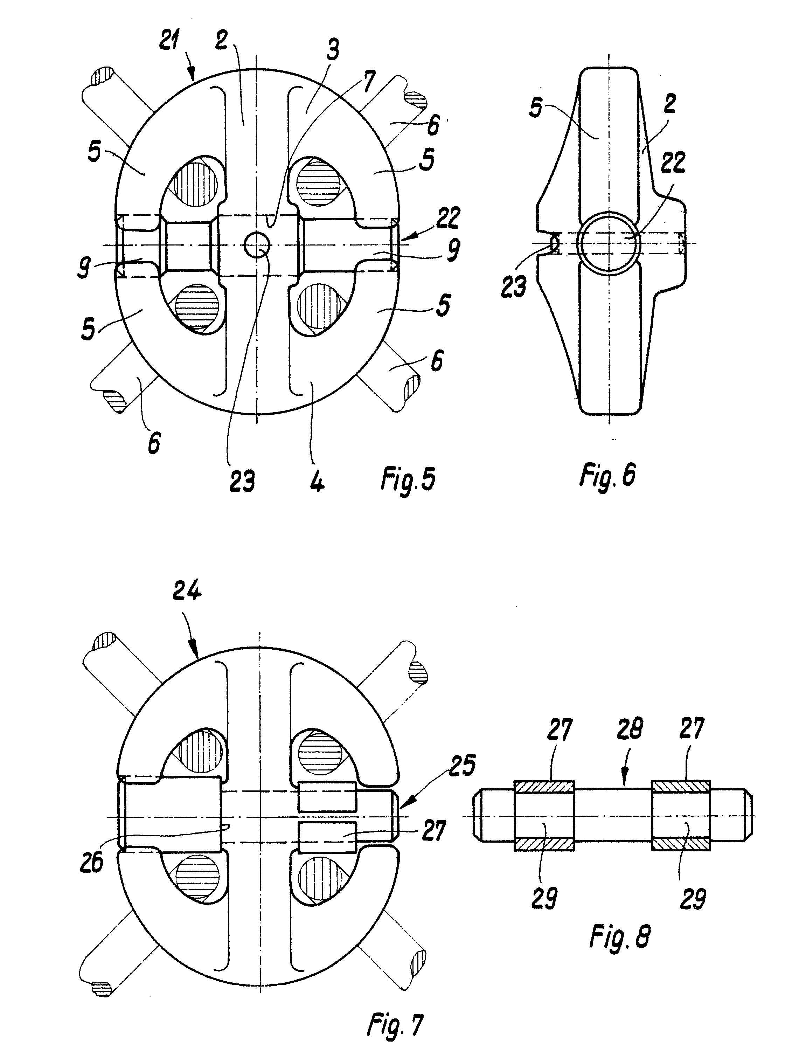

Das Bauteil 21 gemäß Fig. 5 und 6 entspricht in seinem Aufbau weitgehend dem Bauteil 1 gemäß Fig. 1 und 2. Zur Kennzeichnung seiner einzelnen Teile wurden daher die gleichen Bezugszeichen wie in den Fig. 1 und 2 verwendet. Modifiziert sind bei dieser Konstruktion im wesentlichen nur das Schließelement 22 und die seinen Verriegelungszapfen 9 zugewandten Stirnseiten der Enden der Haltearme 5. Die Enden der Haltearme 5 sind schalenförmig ausgebildet und umfassen die zylindrischen Außenflächen der Verriegelungszapfen 9 auf einem Teil ihres Umfanges. Statt einer Sicherungshülse findet hier ein Sicherungsstift 23 Verwendung. Der Längsbalken 2 ist derart verstärkt, daß seine Oberfläche in die Verschleißebene der Reifenkette reicht. Der Verriegelungszapfen 9 und der Sicherungsstift 23 sind auf diese Weise geschützt, wobei die der Fahrbahn zugewandte Seite des Längsbalkens mit Härterippen versehen sein kann.

Bei dem Bauteil 24 gemäß Fig. 7 wird das Schließelement 25 in seiner Lage durch einen als Orientierungshilfe ausgebildeten Bund 26 und durch eine Spannhülse 27 gehalten.

Figur 8 zeigt ein Schließelement 28 mit zwei Spannhülsen 27, die in Ringnuten 29 des Schließelementes gelagert sind.

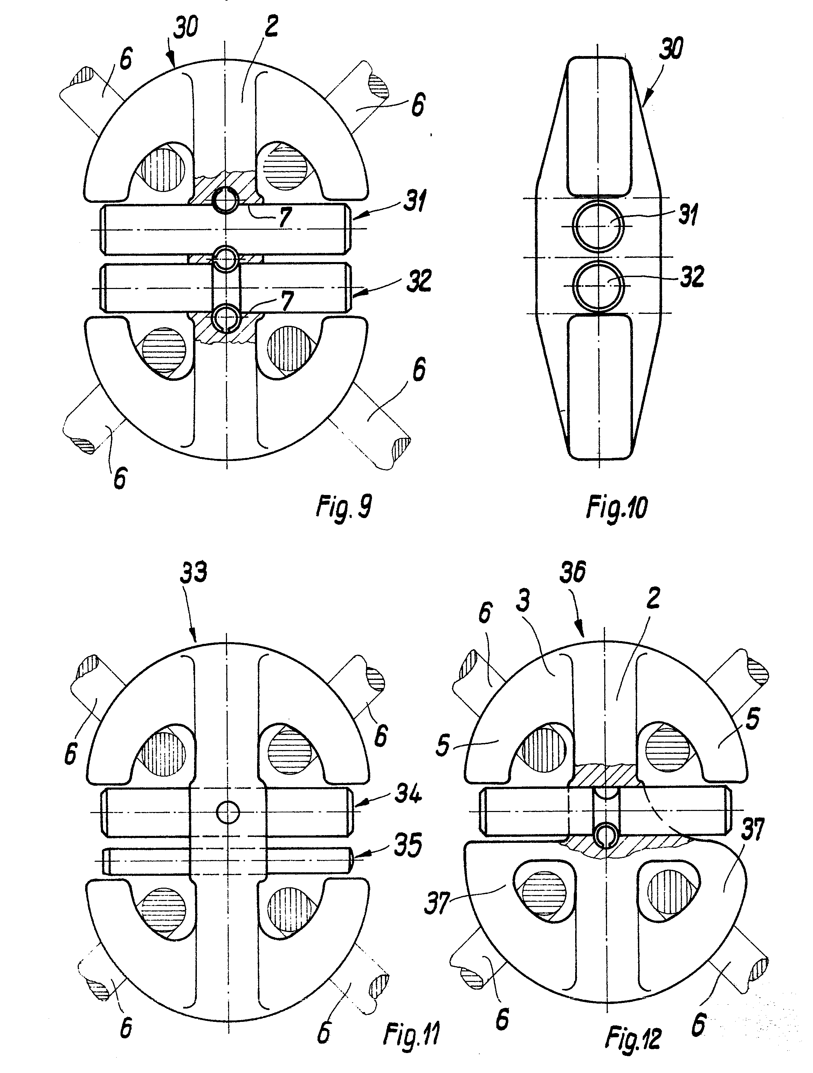

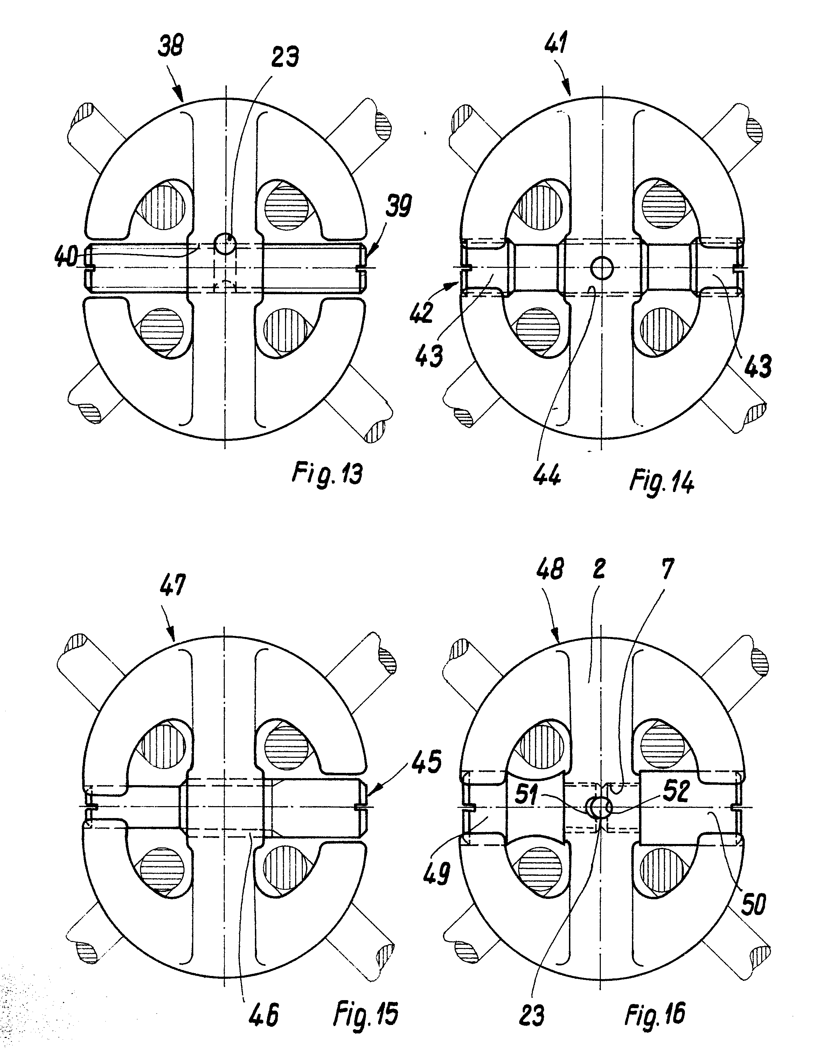

Das Bauteil 30 gemäß Figuren 9 und 10 ist mit zwei Schließelementen 31 und 32 ausgestattet. Durch die Verwendung von zwei Schließelementen gleicher oder geringfügig modifizierter Ausbildung können in die sich gegenüberliegenden T-förmigen Abschnitte des Schließelementes paarweise eingehängte Kettenglieder unabhängig voneinander verriegelt werden.

Eine unabhängige Verriegelung der in sich gegenüberliegenden T-förmigen Abschnitte zugeordneten Kettenglieder 6 ist auch bei dem Bauteil 33 gemäß Figur 11 möglich. In diesem Fall verwendet man ein vergleichsweise starkes Schließelement 34 und ein schwächeres Schließelement 35. Das Schließelement 35 erfüllt hier gewissermassen lediglich eine Hilfsfunktion, um die unteren Kettenglieder 6 zwischendurch in ihrer Position zu verriegeln. Selbst wenn das Schließelement 35 entfernt wird, ist noch eine Sicherung durch das Schließelement 34 gegeben.

In Figur 12 ist ein Bauteil 36 dargestellt, bei dem sich an den Fuß des auch hier mit 2 bezeichneten Längsbalkens des T-förmigen Abschnittes zwei geschlossene Ösen 37 für Kettenglieder 6 anschliessen.

Bei dem Bauteil gemäß Figur 13 wird ein Schließelement 39 verwendet, das von einem Gewindebolzen gebildet wird, der in die mit einem Innengewinde versehene Bohrung 40 des Bauteiles 38 einschraubbar und in der Sicherungsstellung durch einen Sicherungsstift 23 gesichert ist.

An die Stelle eines von einem Gewindebolzen gebildeten Schließelementes 39 ist bei dem Bauteil 41 gemäß Figur 14 ein Schließelement 42 getreten, das mit Gewindeabschnitten 43 und 44 versehen ist. Ein Schließelement 45 mit einem einzelnen Gewindeabschnitt 46

0075532

wird beim Bauteil 47 gemäß Figur 15 verwendet.

Figur 16 schließlich zeigt ein Bauteil 48 mit einem aus zwei Teilen 49 und 50 gebildeten Schließelement. Die Teile 49 und 50 können von verschiedenen Seiten in die Bohrung 7 des Längsbalkens 2 eingeführt werden. Ihre einander zugewandten Enden sind mit Gewindeabschnitten und mit sich gegenüberliegenden Nuten 51 und 52 für einen Sicherungsstift 23 versehen.

0075532

Patentansprüche :

1. Reifenkette mit einer Knotenpunkte aufweisenden Netzkonfiguration, bei der mindestens drei Kettenglieder (6) im Bereich der Knotenpunkte über ein liegend angeordnetes, d.h. parallel zur Reifenfläche orientiertes Bauteil (1;14;21;24;30; 33;36;38;41;47;48) miteinander verbunden sind, das mit hakenförmigen Haltearmen (5;17,18,19) und Einführschlitzen zum Einhängen von Kettengliedern (16) sowie mit mindestens einem Schließelement (8;20;22;25;28;31;32;34;35;39;42;45;49; 50) für die Einführschlitze versehen ist, dadurch gekennzeichnet, daß das Bauteil (1;14;21;24;30;33;36;38;41;47;48) mindestens einen im wesentlichen T-förmigen Abschnitt aufweist, dessen Querbalken (3,4;16) Haltearme (5;17,18) formende, gekrümmte Schenkel besitzt und dessen Längsbalken (2;15) mit einer Bohrung (7) versehen ist, deren Achse im wesentlichen in der Mittenebene der Haltearme (5;17,18) verläuft und die zur Aufnahme des Mittelteiles eines bolzenförmigen Schließelementes (8;20;22;25;28;31;32; 34;35;39;42;45;49;50) dient, dessen sich gegenüberliegende Enden Verriegelungszapfen (9) für die in die Haltearme (5;17,18) des T-förmigen Abschnittes und in mindestens eines weiteren Haltearmes (19) eingehängten Kettengliedes (6) bilden.

2. Reifenkette nach Anspruch 1, dadurch gekennzeichnet, daß das Bauteil (1;21;24;30;33;38;41;47;48) zwei T-förmige Abschnitte mit einem gemeinsamen, an sich gegenüberliegenden Enden jeweils einen Querbalken (3,4) aufweisenden Längsbalken (2) besitzt.

3. Reifenkette nach Anspruch 2,
   dadurch gekennzeichnet,
   daß an den Enden des Längsbalkens (2) jeweils
   zwei bogenförmige Haltearme (5) angeordnet sind
   und die Kontur des Bauteiles - in der Draufsicht betrachtet - im wesentlichen elliptisch
   ist, wobei die größere Achse der Ellipse in
   Richtung des Längsbalkens (2) verläuft.

4. Reifenkette nach Anspruch 1,
   dadurch gekennzeichnet,
   daß an dem zwei Haltearme (17,18) aufweisenden
   Ende des Längsbalkens (15) abgewandten Ende des
   Längsbalkens ein weiterer Haltearm (19) angeordnet ist, wobei einer der beiden an einem Ende
   des Längsbalkens (15) angeordneten Haltearme (17,
   18) gegenüber dem anderen versetzt angeordnet
   ist und das Schließelement (20) schräg zur Längsachse des Längsbalkens (15) steht.

5. Reifenkette nach Anspruch 1,
   dadurch gekennzeichnet,
   daß sich an den Fuß des Längsbalkens (2) des T-
   förmigen Abschnitts des Bauteiles (36) zwei geschlossene Ösen (37) für Kettenglieder (6) anschliessen.

6. Reifenkette nach einem der Ansprüche 1 bis 5,
   dadurch gekennzeichnet,
   daß das Schließelement (8;22) in der Verriegelungsstellung durch mindestens einen Sicherungsstift oder eine Sicherungshülse (11;23) arretierbar ist, der bzw. die die Bohrung für das Schließelement schneidet und in Ausnehmungen des Schließelementes greift.

7. Reifenkette nach Anspruch 6,
   dadurch gekennzeichnet,
   daß die Ausnehmungen des Schließelementes (8)
   von Teilen einer umlaufenden Arretiernut (12)
   gebildet werden.

8. Reifenkette nach Anspruch 7,
   dadurch gekennzeichnet,
   daß die Arretiernut (12) in der Mitte des
   Schließelementes (8) angeordnet ist und sich
   in einem Abstand von ihr, der im wesentlichen
   gleich der halben Breite des die Bohrung (7) umschliessenden Teils des Bauteiles (1) ist, mindestens eine Orientierungshilfe für die Lageorientierung des Schließelementes (8) befindet.

9. Reifenkette nach Anspruch 8,
   dadurch gekennzeichnet,
   daß die Orientierungshilfe von einer Rille (13)
   gebildet wird.

10. Reifenkette nach Anspruch 8,
    dadurch gekennzeichnet,
    daß die Orientierungshilfe von einem Bund (26)
    gebildet wird.

11. Reifenkette nach einem der Ansprüche 1 bis 10,
    dadurch gekennzeichnet,
    daß das Bauteil (1;14;21) im Bereich der Bohrung
    (7) für das Schließelement verstärkt ist.

12. Reifenkette nach einem der Ansprüche 1 bis 11,
    dadurch gekennzeichnet,
    daß der Durchmesser der Verriegelungszapfen (8) annähernd gleich der Breite der Eintrittsöffnung der Einführschlitze (10) für die Kettenglieder (6) ist.

13. Reifenkette nach einem der Ansprüche 1 bis 5, dadurch gekennzeichnet, daß das Schließelement (25) in der Verriegelungsstellung durch mindestens eine federnde Spannhülse (27) gehalten wird.

14. Reifenkette nach Anspruch 13, dadurch gekennzeichnet, daß die Spannhülse (27) in Ringnuten (29) des Schließelementes (28) greift.

15. Reifenkette nach einem der Ansprüche 1 bis 11, dadurch gekennzeichnet, daß das Schließelement (42) mit Gewindeabschnitten (43,44) versehen ist, denen Gewindeabschnitte am Bauteil (41) zugeordnet sind.

16. Reifenkette nach einem der Ansprüche 1 bis 15, dadurch gekennzeichnet, daß das Schließelement aus zwei Teilen (49,50) besteht, die von verschiedenen Seiten in die Bohrung (7) des Längsbalkens (2) einführbar sind.

17. Reifenkette nach Anspruch 16, dadurch gekennzeichnet, daß die Enden der beiden Teile (49,50) mit sich gegenüberliegenden Nuten (51,52) zur Aufnahme eines gemeinsamen Sicherungsstiftes (23) versehen sind.

- 5 -

18. Reifenkette nach Anspruch 2 oder 3,
    dadurch gekennzeichnet,
    daß der Längsbalken (2) zwei Bohrungen (7)
    zur Aufnahme von zwei den einzelnen T-förmi-
    gen Abschnitten zugeordneten Schließelemen-
    ten (31,32) aufweist.

Fig. 1

Fig. 2

Fig. 3

Fig. 4

Fig. 5

Fig. 6

Fig. 7

Fig. 8

Fig. 9

Fig. 10

Fig. 11

Fig. 12

38 23

39

40

Fig.13

41

42

43

43

44 Fig. 14

47

45

46 Fig.15

48 2 7

51 52

49

50

23 Fig.16